# EUROPÄISCHE PATENTANMELDUNG

(11) **EP 0 574 699 A2**
(43) Veröffentlichungstag der Anmeldung: **22.12.1993**
(21) Anmeldenummer: 93107643.4
(22) Anmeldetag: 11.05.1993
(51) Int. Cl.: B01D 69/08, B01D 71/16, D01F 1/08, D01F 2/28, D01D 5/24, A61M 1/34

(54) **Dialysemembran aus Celluloseacetat**

(30) Priorität: 20.05.1992 DE 4216660
(71) Anmelder: Akzo Nobel N.V., NL-6824 BM Arnhem (NL)
(72) Erfinder: Dünweg, Gustav, W-5600 Wuppertal 2 (DE); Steinfeld, Lothar, W-5830 Schwelm (DE); Ansorge, Wolfgang, Dr., W-4300 Essen 1 (DE)
(74) Vertreter: Fett, Günter

(57) **Zusammenfassung**

Dialysemembran in Form eines Hohlfadens mit einem durchgehenden Innenhohlraum aus Celluloseacetat oder einem Celluloseacetat-Derivat, dadurch gekennzeichnet, daß der Hohlfaden unter Verwendung eines Gases zur Ausbildung des Innenhohlraumes hergestellt wird und ein Verfahren zur ihrer Herstellung, wobei eine eine organische Carbonsäure enthaltende Spinnlösung durch eine Spinndüse extrudiert wird, während gleichzeitig in den Innenhohlraum des sich bildenden Hohlfadens ein Gas als Innenmedium eingeführt wird, und wobei anschließend in einem Fällbad die Ausfällung der so gebildeten Dialysemembran und eine übliche weitere Nachbehandlung erfolgt.

## Beschreibung

Die Erfindung betrifft eine Dialysemembran in Form eines Hohlfadens mit einem durchgehenden Innenhohlraum aus Celluloseacetat oder einem Celluloseacetat-Derivat, sowie ein Verfahren zur Herstellung dieser Dialysemembran.

Membranen aus Celluloseacetat sind seit längerem bekannt. Sie existieren etwa in der Form von Flachmembranen, Schlauchmembranen oder Hohlfadenmembranen.

So beschreibt beispielsweise die DE-OS 20 59 048 ein Verfahren zum Herstellen einer trockenen semipermeablen Celluloseacetatmembran, die aus einer aktiven Trennschicht und einer porösen Stützschicht besteht, wobei man die Membran in eine wäßrige Lösung taucht, in der außer einem mehrwertigen Alkohol mit 2 oder 3 Kohlenstoffatomen im Molekül noch mindestens eine andere Substanz enthalten ist, und diese dann trocknet, dadurch gekennzeichnet, daß man die Membran in eine wäßrige Lösung taucht, die als die andere Substanz 2 bis 20 Gew.-% einer organischen Carbonsäure mit 1 bis 3 C-Atomen im Molekül und von dem mehrwertigen Alkohol mit 2 bis 3 C-Atomen im Molekül 20 bis 40 Gew.-% enthält, und sie danach bei einer Temperatur zwischen Raumtemperatur und 100° trocknet. Ziel dieser Erfindung war es, eine Membran zur Verfügung zu stellen, bei der man durch eine dem Trocknen vorangehende Behandlung erreicht, daß die Trennwirkung der Membran durch das Trocknen nicht schlechter wird.

Die DE-OS 26 19 250 beschreibt eine Membran, deren eine Oberfläche nach dem Trockenphaseninversionsverfahren und deren andere Oberfläche nach dem Naßphaseninversionsverfahren hergestellt ist. Hergestellt werden diese Membranen, indem man eine ein Polymer enthaltende Spinnlösung in Form einer Hohlfaser in eine verdampfungsfördernde Gasphase extrudiert und in den Innenraum der Hohlfaser ein Nichtlösungsmittel für das Polymer injiziert, so daß die Außenseite der Hohlfasermembran nach dem Trockenphaseninversionsverfahren und die Innenseite nach dem Naßphaseninversionsverfahren gebildet wird. Hiermit werden trocken gesponnene, asymmetrische Hohlfasern erhalten.

In der DE-OS 26 06 244 ist eine Hohlfaser für die Membranfiltration beschrieben, die aus einem synthetischen oder halbsynthetischen Kettenpolymer besteht, das beim Verspinnen Fäden bildet, und die durch ihre netzartige Struktur charakterisiert ist. Die Hohlfaser wird auf übliche Weise durch Extrudieren einer Spinnlösung durch eine Spinndüse hergestellt, wobei gleichzeitig eine kernbildende Flüssigkeit für die Bildung des Innenhohlraumes in die Mitte des sich bildenden Hohlfadens gebracht wird. Der Hohlfaden wird von oben nach unten, unter Ausnutzung einer bestimmten Luftstrecke, gesponnen.

Um die bekannten Probleme, die bei der Verwendung von hohlraumbildenden Flüssigkeiten während der Herstellung von Hohlfasermembranen entstehen, zu vermeiden, ist verschiedentlich vorgeschlagen worden, anstelle einer Flüssigkeit ein Gas als hohlraumbildende Substanz zu verwenden.

So wird etwa in der EP 0 076 442 ein Hohlfaden aus regenerierter Kupferammoniumcellulose beschrieben, der in der Längsachse eine zylindrische Bohrung aufweist, und zwar über die gesamte Faserlänge, wobei die Länge der Faser mindestens 10 Meter ist und die Bohrung mit einem Gas gefüllt ist. Dieser Hohlfaser wird erhalten, indem eine Spinnlösung durch eine Ringschlitzdüse extrudiert wird, wobei gleichzeitig ein Gas in den sich bildenden Innenraum gebracht wird, und wobei die Faser im freien Fall in einen Luftraum fallengelassen wird und anschließend in einer Tiefe bis zu 30 mm in ein Koagulationsbad eintaucht. Hierzu sind Spinnlösungen mit einer hohen bis sehr hohen Viskosität erforderlich, die naturgemäß sehr schwierig handzuhaben sind.

Nach dem Derwent-Abstract der japanischen Patentanmeldung J 54027-025 werden Hohlfasermembranen, bestehend aus Polyvinylalkohol, erhalten, indem eine Spinnlösung, die Polyvinylalkohol enthält, durch eine Ringschlitzöffnung gesponnen wird, wobei gleichzeitig ein Gas in den sich bildenden Innenhohlraum eingeführt wird, um diesen Innenhohlraum koagulieren zu lassen. Das koagulierende Gas kann etwa Ammoniak oder Acetondampf sein.

Nach dem Derwent-Abstract der japanischen Patentanmeldung J 54055-623 werden Hohlfasermembranen aus Acrylnitril erhalten, indem eine Spinnlösung, die mindestens 50 Gew.-% Acrylnitril enthält, durch eine Düse gesponnen wird und gleichzeitig ein inertes Gas oder Luft zur Bildung des Innenhohlraums durch die Düse gegeben wird. Die so entstehende Membran weist auf ihrer Innenseite eine Haut mit einer Dicke von weniger als 0,5 µm auf.

Die vorgenannten Membranen sind für eine Dialyse jedoch nur bedingt geeignet. Insbesondere bezüglich der Biokompatibilität lassen diese Membranen zu wünschen übrig.

Für die Dialyse geeignete Membranen sollten eine möglichst hohe Biokompatibilität aufweisen. Hierfür müssen eine Reihe von Bedingungen erfüllt sein.

Zu den Substanzen, die die Biokompatibilität einer Membran beeinflussen, gehören etwa das Albumin und das β2-Mikroglobulin. β2-Mikroglobulin (Molekulargewicht ca. 11.800) ist locker an die Oberfläche aller kernhaltigen Zellen als Teil des Haupt-Histokompatibilitäts-Komplexes gebunden. Dieser Komplex ist u.a. für die Verträglichkeit von fremden Gewebe mit körpereigenem Gewebe verantwortlich.

β2-Mikroglobulin wird ausschließlich in der Niere abgebaut, die tägliche Produktionsrate beim gesunden Menschen beträgt etwa 150 mg. Dialysepatienten und Urämiker haben jedoch wesentlich höhere β2-Mikroglobulin-Serumspiegel als Gesunde. Es ist daher von großem Interesse, daß das β2-Mikroglobulin während der Behandlung effektiv entfernt wird.

Die Albumine gehören ebenfalls zur Gruppe der Serumproteine, und stellen darin die größte Gruppe dar. Die Albumine halten den kolloidosmotischen Druck aufrecht und transportieren körpereigene und körperfremde niedermolekulare Stoffe. Außerdem bilden sie das Eiweißreservoir des Körpers.

Da beim Dialysepatienten die Zahl der Albumine im allgemeinen vermindert ist, ist bei einer Behandlung darauf zu achten, daß der Albuminverlust möglichst gering bleibt.

Je nach Anwendungsbereich muß eine Membran bei verschiedenen Ultrafiltrationsraten gleich gute Leistungsparameter, z.B. Siebkoeffizienten, aufweisen können.

Bisher war es jedoch üblich, daß Membranen, die bei einer hohen Ultrafiltrationsrate (high-flux-Bereich) entsprechende Siebkoeffizienten für β2-Mikroglobulin und Albumin aufweisen, diese Daten nicht bei einer mittleren Ultrafiltrationsrate (middle-flux-Bereich) oder bei einer niedrigen bis sehr niedrigen Ultrafiltrationsrate (low-flux-Bereich) erreichten.

Oder aber eine beispielsweise im low-flux-Bereich gut arbeitende Membran fiel im high-flux-Bereich bezüglich ihrer Trennwirkung stark ab.

Es ist daher Aufgabe der Erfindung, eine Membran zur Verfügung zu stellen, die in einem weit gespannten Bereich für die Ultrafiltrationsrate einen geringen Albuminverlust zeigt. Weiterhin soll die Membran in jedem Bereich eine hohe Permeabilität für β2-Mikroglobulin besitzen.

Diese Aufgabe wird gelöst durch eine Membran der eingangs genannten Art, dadurch gekennzeichnet, der Hohlfaden unter Verwendung eines Gases zur Ausbildung des Innenhohlraumes hergestellt wird.

In Ausgestaltung der Erfindung kann das Gas Feststoffpartikel und/oder Flüssigkeitsteilchen enthalten.

Bevorzugt weist die Dialysemembran eine Ultrafiltrationsrate von 2 bis 200 ml/m².h.mm Hg und einen Siebkoeffizienten für Albumin mit einem Molekulargewicht von 68000 von höchstens 0,1 auf.

Die Dialysemembran ist weiterhin dadurch gekennzeichnet, daß sie einen Siebkoeffizienten für β2-Mikroglobulin mit einem Molekulargewicht von 11800 von größer als 0,5 aufweist.

Bevorzugt besteht die Dialysemembran aus Celluloseacetat mit einen mittleren Acetylierungsgrad von 2,0 bis 3,0, bevorzugt von 2,4 bis 2,6.
Unter dem mittleren Acetylierungsgrad wird dabei die mittlere Anzahl der pro Cellulosemolekül substituierten OH-Gruppen verstanden.

Die Aufgabe wird ebenfalls gelöst durch ein Verfahren zur Herstellung einer solchen Dialysemembran in Form eines Hohlfadens mit einem durchgehenden Innenhohlraum, wobei man eine eine organische Carbonsäure enthaltende Spinnlösung, gegebenenfalls unter Zusatz von Modifizierungsmitteln, durch eine für die Herstellung von Hohlfäden geeignete Spinndüse extrudiert, während gleichzeitig in den Innenhohlraum des sich bildenden Hohlfadens ein Innenmedium eingeführt wird, und wobei anschließend in eine Fällbad die Ausfällung der so gebildeten Dialysemembran und eine übliche weitere Nachbehandlung erfolgt, dadurch gekennzeichnet, daß der Hohlfaden unter Verwendung eines Gases als Innenmedium zur Ausbildung des Innenhohlraumes hergestellt wird.

In Ausgestaltung der Erfindung kann das Gas Feststoffpartikel und/oder Flüssigkeitsteilchen enthalten.

Bevorzugt wird das Fällbad auf eine Temperatur zwischen 5 und 50°C, besonders bevorzugt zwischen 5 und 15°C, gehalten.

Gemäß einer bevorzugten Ausführungsform der Erfindung wird die extrudierte Spinnlösung über eine Strecke von mindestens 50 cm durch das Fällbad geführt, bevor eine erste Umlenkung des sich gebildeten Hohlfadens erfolgt.

Bevorzugt wird der Spinnlösung ein Modifizierungsmittel, wie etwa Glycerin, Polyethylenglykol, Polypropylenglykol, Polyvinylpyrrolidon oder Mischpolymerisate von Äthylenoxid und Propylenoxid zugesetzt.

Bevorzugt wird als organische Carbonsäure in der Spinnlösung Essigsäure eingesetzt.

Bevorzugt enthält die Spinnlösung 9 bis 30 Gew.-% Celluloseacetat, 60 bis 91 Gew.-% Essigsäure sowie ggf. Modifizierungsmittel und/oder Wasser.

In Ausgestaltung der Erfindung enthält die Spinnlösung 5 bis 20 Gew.-% Modifizierungsmittel.

In einer weiteren Ausgestaltung der Erfindung enthält die Spinnlösung 5 bis 20 Gew.-% Wasser.

Das erfindungsgemäße Verfahren führt insbesondere dann zu guten Ergebnissen, wenn die Spinnlösung 10 bis 20 Gew.-% Celluloseacetat, 60 bis 70 Gew.-% Essigsäure, 5 bis 15 Gew.-% Modifizierungsmittel und 5 bis 15 Gew.-% Wasser enthält.

Bevorzugt handelt es sich bei dem Fällbad um eine verdünnte Essigsäure.

Bevorzugt wird die Essigsäure im Fällbad auf einer Konzentration zwischen 1 und 20 Gew.-% gehalten.

Es hat sich ebenfalls als vorteilhaft für das Verfahren erwiesen, wenn die Spinndüse in das Fällbad eingetaucht ist und der Hohlfaden von unten nach oben gesponnen wird.

Die Erfindung wird durch das nachstehende Beispiel näher erläutert.

### Beispiel 1

Eine Spinnlösung der Zusammensetzung 16,0 Gew.-% Cellulosediacetat, 68,0 Gew.-% Essigsäure einer Konzentration von 99,9% , 8,0 Gew.-% Wasser und 8,0 Gew-% Polyäthylenglykol 400 wurde durch eine Ringschlitzdüse mit einer Weite von 0,045 mm und einem äußeren Durchmesser von 0,43 mm extrudiert, während gleichzeitig Stickstoffgas in die Austrittsöffnung der Spinndüse unter einen Druck von 73 mbar gebracht wurde. Die Spinndüse war so angeordnet, daß ihre Austrittsöffnung senkrecht nach oben zeigte, und der Abstand zwischen Düsenaustrittsöffnung und Badoberfläche 70 cm betrug.

Das Fällbad enthielt 65 g Essigsäure pro 1 Liter enthärtetem Wasser, die Temperatur des Fällbades betrug 15°. Bei einer Spinngeschwindigkeit von 16 m/min betrug die Aufenthaltszeit des sich bildenden Hohlfadens im Fällbad 2,6 sec. Nach Austritt aus dem Fällbad wurde der Hohlfaden in enthärtetem Wasser bei 35° von Lösungsmitteln und Begleitstoffen freigewaschen und am Ende der Strecke mit Glycerin behandelt.

Die Trocknung erfolgte kontinuierlich in einem Trommeltrockner mit Oberflächentemperaturen von 50 bis 65°C. Der fertige Hohlfaden wurde auf Kreuzspulen aufgewickelt. Der Querschnitt des Hohlfadens war an jeder Stelle in Längsrichtung kreisrund und von einer gleichbleibenden Abmessung von 218 µm, während die Wandstärke konstant 24 µm betrug. Aus diesem Hohlfaden hergestellte Prüfkörper zeigten die folgenden Leistungsdaten:

| | |
|---|---|
| Ultrafiltrationsrate: | 167 ml/m².h.mm Hg |
| Dialysierleistung für Vitamin B12: | 16,1 cm/min . 10⁻³ |
| Dialysierleistung für Kreatinin: | 48,5 cm/min . 10⁻³ |
| Siebkoeffizient für Albumin: | 0,046 |
| Siebkoeffizient für β2-Mikroglobulin: (gemessen als Cytochrom-C) | 0,65 |

## Patentansprüche

1. Dialysemembran in Form eines Hohlfadens mit einem durchgehenden Innenhohlraum aus Celluloseacetat oder einem Celluloseacetat-Derivat, dadurch gekennzeichnet, daß der Hohlfaden unter Verwendung eines Gases zur Ausbildung des Innenhohlraumes hergestellt wird.

2. Dialysemembran nach Anspruch 1, dadurch gekennzeichnet, daß das Gas Feststoffpartikel und/oder Flüssigkeitsteilchen enthält.

3. Dialysemembran nach Anspruch 1 oder 2, dadurch gekennzeichnet, daß sie eine Ultrafiltrationsrate von 2 bis 200 ml/m².h.mm Hg und einen Siebkoeffizienten für Albumin mit einem Molekulargewicht von 68000 von höchstens 0,1 aufweist.

4. Dialysemembran nach einem oder mehreren der Ansprüche 1 bis 3, dadurch gekennzeichnet, daß sie einen Siebkoeffizienten für β2-Mikroglobulin mit einem Molekulargewicht von 11800 von größer als 0,5 aufweist.

5. Dialysemembran nach einem oder mehreren der Ansprüche 1 bis 4, dadurch gekennzeichnet, daß sie aus Celluloseacetat mit einen mittleren Acetylierungsgrad von 2,0 bis 3,0, bevorzugt von 2,4 bis 2,6 besteht.

6. Verfahren zur Herstellung einer Dialysemembran in Form eines Hohlfadens mit einem durchgehenden Innenhohlraum nach einem oder mehreren der Ansprüche 1 bis 5, wobei man eine eine organische Carbonsäure enthaltende Spinnlösung, gegebenenfalls unter Zusatz von Modifizierungsmitteln, durch eine für die Herstellung von Hohlfäden geeignete Spinndüse extrudiert, während gleichzeitig in den Innenhohlraum des sich bildenden Hohlfadens ein Innenmedium eingeführt wird, und wobei anschließend in einem Fällbad die Ausfällung der so gebildeten Dialysemembran und eine übliche weitere Nachbehandlung erfolgt, dadurch gekennzeichnet, daß der Hohlfaden unter Verwendung eines Gases als Innenmedium zur Ausbildung des Innenhohlraumes hergestellt wird.

7. Verfahren nach Anspruch 6, dadurch gekennzeichnet, daß das Gas Feststoffpartikel und/oder Flüssigkeitsteilchen enthält.

8. Verfahren nach Anspruch 6 oder 7, dadurch gekennzeichnet, daß das Fällbad auf eine Temperatur zwischen 5 und 50 °C, bevorzugt zwischen 5 und 15°C, gehalten wird.

9. Verfahren nach einem oder mehreren der Ansprüche 6 bis 8, dadurch gekennzeichnet, daß die extrudierte Spinnlösung über eine Strecke von mindestens 50 cm durch das Fällbad geführt wird, bevor eine erste Umlenkung des sich gebildeten Hohlfadens erfolgt.

10. Verfahren nach einem oder mehreren der Ansprüche 6 bis 8, dadurch gekennzeichnet, daß der Spinnlösung als Modifizierungsmittel Glycerin, Polyäthylenglykol, Polypropylenglykol, Mischpolymerisate von Äthylenoxid und Propylenoxid oder Polyvinylpyrrolidon zugesetzt werden.

11. Verfahren nach einem oder mehreren der Ansprüche 6 bis 10, dadurch gekennzeichnet, daß die organische Carbonsäure Essigsäure ist.

12. Verfahren nach einem oder mehreren der Ansprüche 6 bis 11, dadurch gekennzeichnet, daß die Spinnlösung 9 bis 30 Gew.-% Celluloseacetat, 60 bis 91 Gew.-% Essigsäure sowie ggf. Modizierungsmittel und/oder Wasser enthält.

13. Verfahren nach einem oder mehreren der Ansprüche 6 bis 12, dadurch gekennzeichnet, daß die Spinnlösung 5 bis 20 Gew.-% Modifizierungsmittel enthält.

14. Verfahren nach einem oder mehreren der Ansprüche 6 bis 13, dadurch gekennzeichnet, daß die Spinnlösung 5 bis 20 Gew.-% Wasser enthält.

15. Verfahren nach einem oder mehreren der Ansprüche 6 bis 14, dadurch gekennzeichnet, daß die Spinnlösung 10 bis 20 Gew.% Celluloseacetat, 60 bis 70 Gew.% Essigsäure, 5 bis 15 Gew.% Modifizierungsmittel und 5 bis 15 Gew.% Wasser enthält.

16. Verfahren nach einem oder mehreren der Ansprüche 6 bis 15, dadurch gekennzeichnet, daß das Fällbad eine verdünnte Essigsäure ist.

17. Verfahren nach Anspruch 16, dadurch gekennzeichnet, daß die Essigsäure im Fällbad auf eine Konzentration zwischen 1 und 20 Gew.-% gehalten wird.

18. Verfahren nach einem oder mehreren der Ansprüche 6 bis 17, dadurch gekennzeichnet, daß die Spinndüse in das Fällbad eingetaucht ist und der Hohlfaden von unten nach oben gesponnen wird.
